# EUROPEAN PATENT APPLICATION

(11) **EP 3 352 063 A1**
(43) Date of publication of application: **25.07.2018**
(21) Application number: 16846288.5
(22) Date of filing: 02.09.2016
(51) Int. Cl.: G06F 3/044, G06F 3/041, H01H 36/00

(54) **OPERATION DEVICE**

(30) Priority: 14.09.2015 JP 2015180399
(71) Applicant: Kabushiki Kaisha Tokai Rika Denki Seisakusho, Ohguchi-cho Niwa-gun Aichi 480-0195 (JP)
(72) Inventor: NOGUCHI, Kunitoshi, Niwa-gun Aichi 480-0195 (JP)
(74) Representative: Gill, David Alan
(86) International application number: PCT/JP2016/075863
(87) International publication number: WO 2017/047417

(57) **Abstract**

Provided is an operation device 1 comprising: a first detection electrode 100 that is arranged on the periphery of a mounting target device and that comprises a plurality of detection electrodes arranged in a first direction; a second detection electrode 200 that comprises a plurality of detection electrodes arranged in a second direction intersecting the first direction; and a base film 50 that is arranged between the first detection electrode 100 and the second detection electrode 200 and that serves as an insulating layer for insulating and integrating the first detection electrode 100 and the second detection electrode 200. A sensor panel 10 configured from the first detection electrode 100, the second detection electrode 200, and the base film 50 has a shape suitable for arrangement on the periphery of the mounting target device.

## Description

### Technical field

The present invention relates to an operation device.

### Background art

A capacitance switch is known that includes a transparent electrode provided on a translucent protective cover that covers a control target and a detection circuit that detects a variation in the capacitance to ground to output a detection signal for driving a control means. Such a capacitance switch is included in a known operation device (vehicle instrument) (see Patent Document 1). The operation device includes a display that displays vehicle operation information, a translucent protective cover disposed in front of the display that protects the display, the capacitance switch, and a controller. The capacitance switch includes a transparent electrode disposed on the translucent protective cover at a location facing the display and detects a variation in the capacitance to ground in the transparent electrode to output a detection signal. The controller controls a display of the display on the basis of a detection signal from the capacitance switch.

According to the operation device of Patent Document 1, the transparent electrode, disposed behind the transparent protective panel, detects capacitance and output it to a capacitance detection circuit. The capacitance increases as an object to be detected, such as a finger, comes closer to the transparent protective panel. Accordingly, use and provision of a capacitance switch, configured to detect a variation of the capacitance to ground in the transparent electrode, for/to the translucent protective cover enables operation of the device without application of stress such as pressing force onto the translucent protective cover. In addition, the device is considered to provide an improved design, by concealing a switch unit from an external, and improved miniaturization of the switch unit.

### Citation list

### Patent document

Patent Document 1: JP 2007-80808A

### Summary of the invention

### Technical problem

The transparent electrode in the operation device disclosed in Patent Document 1 allows close/proximate detection by a finger, etc., which permits an operation of the device including renewal of displays and turning light on and off, for example. Unfortunately, the device is configured such that the transparent electrode can be installed only on a part of the body of the device. This restricts where the electrode can be installed and prohibits a required close/proximate contact and detection of a coordinate in a direction from around the device.

An object of the invention is to provide an operation device including electrodes having a configuration and an arrangement that allow a close/proximate contact and detection of a coordinate in a direction from around the front surface of the device.

### Solution to problem

(1) An operation device according to an embodiment of the invention is configured to be disposed around an instrument to which the operation device is attached. The operation device includes a first detection-electrode group including multiple electrodes disposed in a first direction and a second detection-electrode group having multiple electrodes disposed in a second direction intersecting the first direction. The operation device further includes an insulation layer disposed between the first and second detection-electrode groups. The insulation layer insulates each of the first and second detection-electrode groups, and integrates the first and second detection-electrode groups together. The first and second detection-electrode groups and the insulation layer compose a sensor panel. The sensor panel has a shape able to be disposed around the instrument to which the operation device is attached.
(2) The sensor panel of the operation device described in (1) may have a loop-like shape able to be disposed around the instrument to which the operation device is attached.
(3) The sensor panel of the operation device described in (1) or (2) may include a mutual capacitance detection sensor including the first and second detection-electrode groups.
(4) The first and second detection-electrode groups of the operation device described in (1) to (3) may each include a transparent electrode.
(5) The sensor panel of the operation device described in (1) may include a center hole area corresponding to a display surface and an operation surface of the instrument to which the operation device is attached.
(6) The center hole area of the operation device described in (5) may not accommodate the first and second detection-electrode groups.

### Advantageous effects of the invention

An embodiment of the invention provides an operation device having a configuration and an arrangement that allow a close/proximate contact and detection of a coordinate in a direction from around the front surface of the device.

### Brief description of the drawings

FIG. 1 is an exploded perspective view of a first detection-electrode group, a second detection-electrode group and an insulation layer according to an embodiment of the invention.
FIG. 2A is a plan view illustrating a wiring pattern of a first detection-electrode group.
FIG. 2B is a plan view illustrating a wiring pattern of a second detection-electrode group.
FIG. 3 is a block diagram illustrating a configuration of a sensor panel of an operation device according to an embodiment of the invention.
FIG. 4 is a block diagram illustrating an overall configuration of an operation device according to an embodiment of the invention when installed in an air conditioning instrument for a vehicle.
FIG. 5 is an elevation view illustrating an operation device according to an embodiment of the invention installed in an air conditioning instrument for a vehicle.

### Description of embodiment

### Embodiments of Present Invention

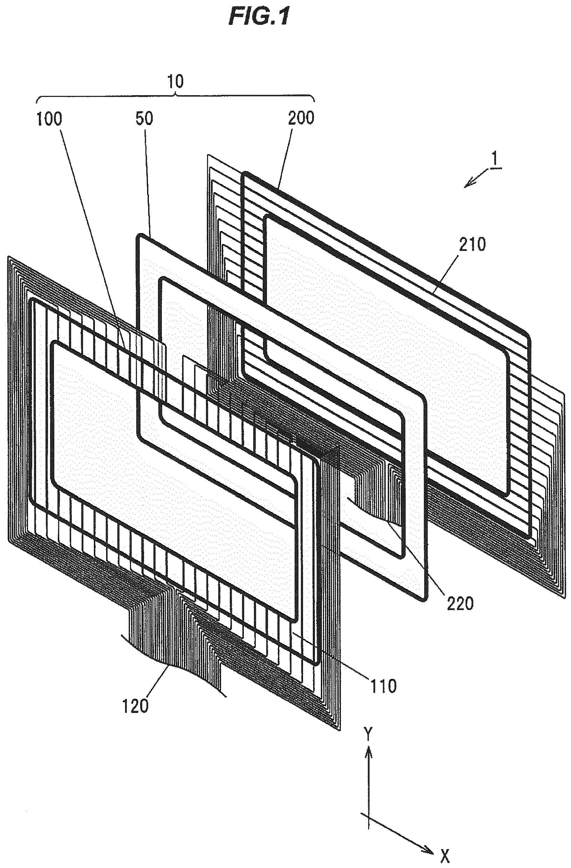

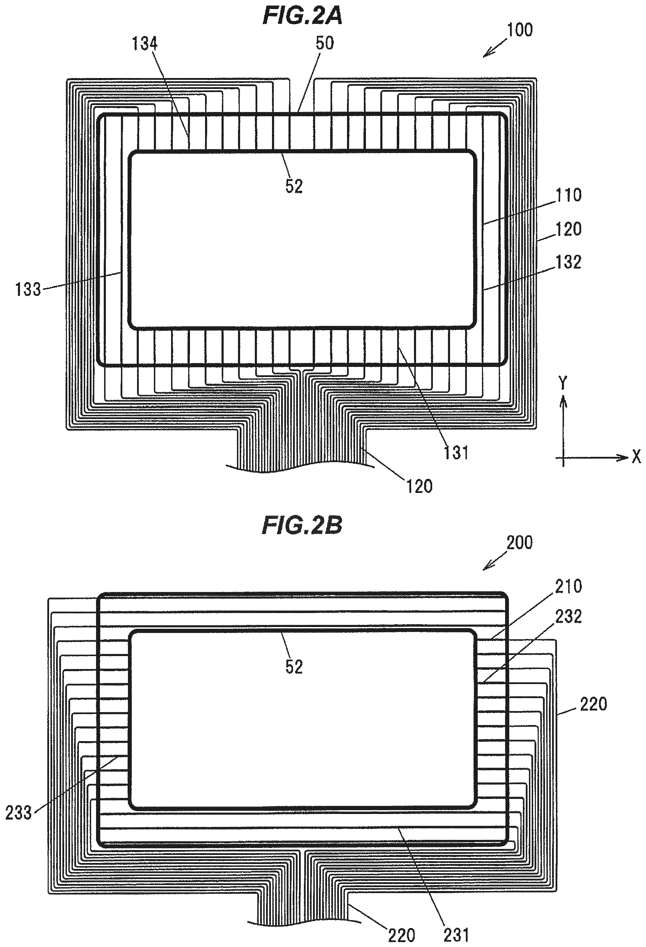

FIG. 1 is an exploded perspective view of a first detection-electrode group, a second detection-electrode group and an insulation layer of an operation device according to an embodiment of the invention. FIG. 2A is a plan view illustrating a wiring pattern of a first detection-electrode group, and FIG. 2B is a plan view illustrating a wiring pattern of a second detection-electrode group.

An operation device 1 according to an embodiment of the invention is configured to be disposed around an instrument to which the operation device is attached. The operation device 1 includes a first detection-electrode group 100 having multiple electrodes disposed in a first direction and a second detection-electrode group 200 having multiple electrodes disposed in a second direction intersecting the first direction. The operation device 1 further includes a base film 50 disposed between the first detection-electrode group 100 and the second detection-electrode group 200. The base film 50, having a function as an insulation layer, insulates each of the first and second detection-electrode groups 100, 200, and integrates the first and second detection-electrode groups 100, 200 together. The first and second detection-electrode groups 100, 200 and the base film 50 together compose a sensor panel 10. The sensor panel 10 has a form of being disposed around an instrument to which the operation device/sensor panel is attached.

### Base Film 50

The base film 50 is a base on which the first and second detection-electrode groups 100, 200 are laid, holds the first and second detection-electrode groups 100, 200 in a thickness direction with a substantially regular interval therebetween, and serves as an insulation layer for insulation of the first and second detection-electrode groups 100, 200. The base film 50 is made of a film-like insulator having a thickness t (the thickness in general is approximately from 12 µm to 50 µm) and provides a flexible printed circuit (FPC). The base film 50 is provided on one side thereof with a first detection-electrode group 100 made of a conductive material and on the other side thereof with a second detection-electrode group 200 made of a conductive material. Wiring units 120, 220 drawn respectively from the first and second detection-electrode groups 100, 200 are electrically connected to a reading unit 320 and a driving unit 310. The base film 50 is made of resin such as polyimide, for example, and has a predetermined dielectric constant. The base film 50 is sandwiched between the first and second detection-electrode groups 100, 200. The base film 50 functions as a capacitor, providing a predetermined capacitance at an intersection point between the base film 50 and the first detection-electrode group 100 and at an intersection point between the base film 50 and the second detection-electrode group 200. The first and second detection-electrode 100, 200 will be described further below.

As illustrated in FIGS. 1 and 2A, the base film 50 has a loop-like shape. Specifically, the base film 50 has a rectangular outer profile (such as an oblong or square shape) and a center hole area 52 hollowed or formed in the center part of the base film 50. The shape of the loop-like shape is determined so that the loop-like shape can comply to any constraints on the arrangement and the dimensions of the instrument to which the base film is attached. The shape of the base film 50 is used to determine the shapes of first and second detection-electrode groups 100, 200 described below.

### First Detection-electrode Group 100

A first detection-electrode group 100 is made of a conductive material, includes multiple detection electrodes disposed in the first direction, and is laid on the base film 50. Variation of a capacitance value determined at an intersection point with a second detection-electrode group 200 detects a coordinate in the first direction. As illustrated in FIGS. 1 to 2B, the first direction or X direction and the second direction or Y direction intersect with each other. The first detection-electrode group 100 includes multiple electrodes in the X direction with regular intervals so that it can detect a coordinate in the X direction.

The first detection-electrode group 100 includes a transparent electrode such as indium tin oxide (ITO). Alternatively, other conductive materials including copper foil can be employed depending on the installation position of the first detection-electrode group 100.

As illustrated in FIGS. 1 and 2A, the first detection-electrode group 100 includes an X electrode unit 110 shaped conforming to the rectangular shape of the base film 50, and a wiring unit 120 for providing wiring from the X electrode unit 110 to a controller. As illustrated in FIG. 2A, a lower side part 131, a right side part 132 and a left side part 133 of the X electrode unit 110 respectively corresponding to a lower side part, a right side part and a left side part of the base film 50 are directly wired in a downward direction. An upper side part 134 of the X electrode unit 110 corresponding to an upper side of the base film 50 is wired in an upward direction, then diverged into the sides of the right side part 132 and the left side part 133, and is wired in a downward direction. Such a wiring configuration can comply to any constraints on the arrangement and dimensions of the base film 50 having the center hole area 52. The wiring configuration or method described above can be modified depending on the constraints on the arrangement and dimensions of the base film 50.

### Second Detection-electrode Group 200

The second detection-electrode group 200 is made of a conductive material, includes multiple detection electrodes disposed in the first direction, and is laid on the base film 50. Variation of a capacitance value determined at an intersection point with the first detection-electrode group 100 detects a coordinate in a second direction. As illustrated in FIGS. 1 to 2B, the second detection-electrode group 200 is aligned in the second direction or Y direction intersecting a first direction or X direction. Thus, the second detection-electrode group 200 can detect a coordinate in the Y direction.

The second detection-electrode group 200 includes a transparent electrode such as indium tin oxide (ITO). Alternatively, other conductive materials including copper foil can be employed depending on the installation position of the second detection-electrode group 200.

As illustrated in FIGS. 1 and 2B, the second detection-electrode group 200 includes a Y electrode unit 210 shaped conforming to the rectangular shape of the base film 50, and a wiring unit 220 for providing wiring from the Y electrode unit 210 to a controller. As illustrated in FIG. 2B, a lower side part 231 and a right side part 232 of the Y electrode unit 210 respectively corresponding to a lower side part and a right side part of the base film 50 are guided to the side of the right side part 231 and are wired in a downward direction. A left side part 233 and a right side part 234 of the Y electrode unit 210 corresponding to a left side part and a right side part, respectively, of the base film 50 are guided to the side of the left side part 233 and are wired in a downward direction. Such a wiring configuration can comply to any constraints on the arrangement and dimensions of the base film 50 having the center hole area 52. The wiring configuration or method described above can be modified depending on the constraints on the arrangement and dimensions of the base film 50.

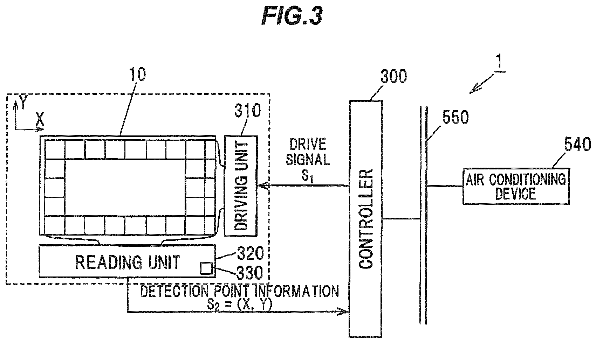

FIG. 3 is a block diagram illustrating a configuration of a sensor panel of an operation device according to an embodiment of the invention. The sensor panel 10 is controlled by a controller 300. As illustrated in FIG. 3, the controller 300 includes a driving unit 310 for driving the Y electrode unit 210 (second detection-electrode group 200) and a reading unit 320 for reading capacitance of the X electrode unit 110 (first detection-electrode unit 100).

The driving unit 310 is configured to sequentially supply voltage to the Y electrode unit 210 (second detection-electrode group 200) in the form of a periodic electrical current based on a drive signal S1 outputted from the controller 300.

The reading unit 320 sequentially contacts each of multiple detection electrodes of the X electrode unit 110 (first detection-electrode group 100) to read out capacitance, while one of multiple detection electrodes of the Y electrode unit 210 (second detection electrode 200) is in active. The reading unit 320 has a threshold 330 and compares the read capacitance with the threshold 330 to carry out touch detection. The reading unit 320 outputs coordinates (X, Y) providing detection point information S2 including touch detection point information. The coordinates including the detection points are calculated by means of weight average, for example.

### Controller 300

The controller 300 is composed of a microcomputer such as a central processing unit (CPU) and a semiconductor memory such as random access memory (RAM) and a read only memory (ROM), etc. As described above, the controller 300 outputs a driving signal S1 to the driving unit 310 to drive electrodes and obtains coordinates (X, Y) providing detection point information S2 of detection points.

The operation device according to an embodiment includes a sensor panel 10. The sensor panel 10 obtains, by mutual capacitance method, coordinates (X, Y) providing detection point information S2 of detection points. In the mutual capacitance method, a finger or the like moving closer causes variation of mutual capacitance generated at each intersecting point between a Y electrode unit 210 (second detection-electrode group 200) and an X electrode unit 110 (first detection-electrode group 100). The variation is detected by sequentially driving the Y electrode unit 210 (second detection-electrode group 200) and the X electrode unit 110 (first detection-electrode group 100) to detect a proximate position or a touch position.

### Application Example

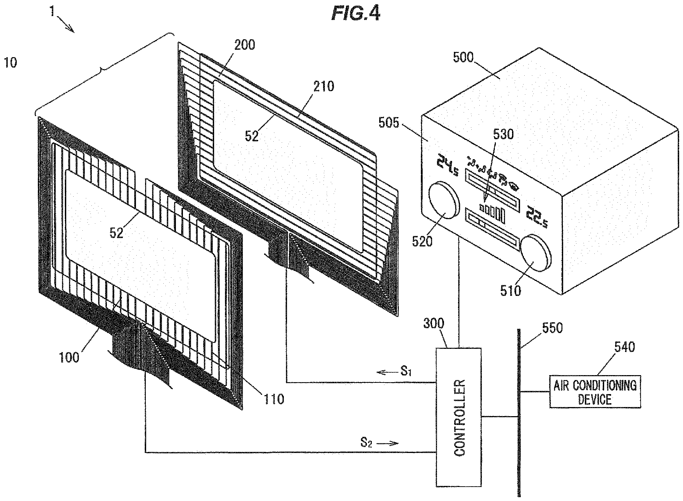

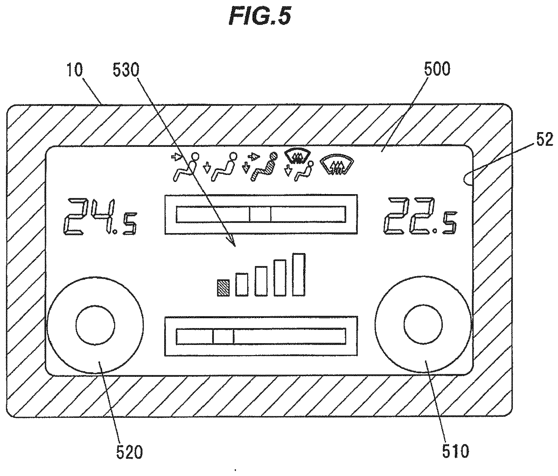

FIG. 4 is a block diagram illustrating an overall configuration of an operation device according to an embodiment of the invention when installed in an air conditioning instrument for a vehicle. FIG. 5 is an elevation view illustrating the operation device according to an embodiment of the invention installed in an air conditioning instrument for a vehicle.

As illustrated in FIG. 4, the sensor panel 10 is attached to a front surface 505 of an air conditioning instrument 500. The air conditioning instrument 500 serves as an apparatus in which the operation device is installed and as an apparatus to be mounted on a vehicle. The air conditioning instrument 500 operates an air conditioning device 540 mounted on the vehicle. The sensor panel 10 detects a proximate position by coordinate values X, Y when an operator moves his/her finger close to the front surface 505 of the air conditioning instrument 500 in order to operate the air conditioning instrument 500.

As illustrated in FIG. 4, the sensor panel 10 includes the X electrode unit 110 (first detection-electrode group 100) and the Y electrode unit 210 (second detection-electrode group 200) which are connected to a controller 300. The air conditioning instrument 500, serving as an instrument to which the operation device is attached, is also connected to the controller 300.

The controller 300 is connected to a vehicular local area network (LAN) 550. The vehicular LAN 550 is connected with various instruments used on a vehicle, including the air conditioning device 540 provided with an air conditioning instrument 500 that controls a heater inside the vehicle.

As described above, the sensor panel 10 includes the first and second detection-electrode groups 100, 200 and the base film 50, which are integrated in a multilayer configuration, and has a panel-like configuration. As illustrated in FIG. 5, the sensor panel 10 is attached to the front surface 505 of the air conditioning instrument 500.

As illustrated in FIG. 5, the air conditioning instrument 500 is provided on the front surface 505 thereof with two rotation knobs 510, 520. For example, the rotation knob 510 controls the temperature of a driving seat (D seat) while the rotation knob 520 controls the temperature of a passenger seat (P seat). These knobs 510, 520 protrude from the front surface 505 of the air conditioning instrument 500. The air conditioning instrument 500 includes a display 530 provided near the center of the air conditioning instrument 500. The display 530 displays the set temperature, operation contents and the like.

The sensor panel 10 has to be installed so that it does not to disturb operational and displaying functions of the abovementioned rotation knobs 510, 520 protruding from the front surface 505 of the air conditioning instrument 500 and the display 530. Thus, the sensor panel 10 is provided with a loop-like shape having a center hole area 52 hollowed in the center of the sensor panel 10. The sensor panel 10 is attached to the air conditioning instrument 500 so that the center hole area 52 surrounds the rotation knobs 510, 520 and the display 530. Such a configuration can comply to any constraints on the arrangement and dimensions of an instrument to which the sensor panel 10 is installed.

With the air conditioning instrument 500 with the configuration described above, the position coordinates of an operator's finger can be detected when his/her finger is moved close to the sensor panel 10. The position coordinates can be directly detected by a resolution of coordinates where the X electrode unit 110 (first detection-electrode group 100) and the Y electrode unit 210 (second detection-electrode group 200) intersect with each other. In addition, weight average, etc. can provide coordinate detection of high resolution. Furthermore, provision of high output driving signal S1 to the driving unit 310 can increase detection sensitivity.

Detected position coordinates of the operator's finger can illuminate a light, for example, as his/her finger moves closer. Proximate detection near the rotation knob 510 can provide illumination of a light of the rotation knob 510 and proximate detection near the rotation knob 520 can provide illumination of a light of the rotation knob 520. Furthermore, proximate detection at a location near an upper part of the sensor panel 10 can provide illumination of a light of the display 530.

The operation device 1 including the sensor panel 10 according to an embodiment of the invention allows detection of position coordinates of an operator's finger, with high resolution and high sensitivity. Thus, the sensor device 1 can be allocated with more operation functions than a device in the related art that can merely carry out proximate detection.

### Effects of Embodiments of Present Invention

The operation device 1 including the sensor panel 10 according to an embodiment provides the following advantageous effects.
(1) The sensor panel 10 has a loop-like shape provided with a center hole area 52 hollowed in the center part of the sensor panel 10. The sensor panel 10 is attached to the air conditioning instrument 500 so that the center hole area 52 surrounds the rotation knobs 510, 520 and a display 530. Such a configuration can comply to any constraints on the arrangement and dimensions of an instrument to which the sensor panel is attached.
(2) The sensor panel 10 includes the first detection-electrode group 100 (X electrode unit 110) and the second electrode group 200 (Y electrode unit 210) with the base film 50 disposed therebetween. The first and second electrode groups 100, 200 and the base film 50 together form a multilayer structure. The operation device in an embodiment of the invention does not include a base plate. In a case where the base plate is interposed between the X electrode unit 110 and the Y electrode unit 210, a variation can be adversely caused in a detection distance. The operation device in this embodiment avoids such problem and provides a position detection of high performance.
(3) The air conditioning instrument 500 is able to detect position coordinates of an operator's finger in a case where the operator moves his/her finger close to the sensor panel 10. The position coordinates can be directly detected by a resolution of coordinates where the X electrode unit 110 (first detection-electrode group 100) and the Y electrode unit 210 (second detection-electrode group 200) intersect with each other. The operation device 1 including the sensor panel 10 allows detection of position coordinates of an operator's finger with high resolution and high sensitivity. Thus, the sensor device 1 can be allocated with more operation functions than a device in the related art that can only carry out proximate detection.
(4) As seen in the configurations and effects described above, the operation device can be provided with a configuration and an arrangement of electrodes that allow a close/proximate contact and detection of a coordinate in a direction from around the front surface of the device.

The embodiments of the invention described above are merely examples and do not intend to limit the scope of the invention described in the claims. These novel embodiments may be implemented in various other forms, and various omissions, substitutions, changes, and the like can be made without departing from the spirit and scope of the invention. In addition, all the combinations of the features described in these embodiments are not necessarily needed to solve the technical problem. Further, these embodiments are included within the spirit and scope of the invention and also within the invention described in the claims and the scope of equivalents thereof.

### Reference signs list

1 Operation device
10 Sensor panel
50 Base film
52 Center hole area
100 First detection-electrode group
200 Second detection-electrode group

## Claims

1. An operation device, comprising:
a first detection-electrode group disposed around an instrument to which the operation device is attached and including multiple detection electrodes disposed in a first direction;
a second detection-electrode group including multiple detection electrodes disposed in a second direction intersecting the first direction; and
an insulation layer disposed between the first detection-electrode group and the second detection-electrode group so as to insulate and integrate the first detection-electrode group and the second detection-electrode group,
wherein a sensor panel comprises the first detection-electrode group, the second detection-electrode group, and the insulation layer, and
wherein the sensor panel has a shape able to be disposed around the instrument.

2. The operation device according to claim 1, wherein the sensor panel has a loop shape able to be disposed around the instrument.

3. The operation device according to claim 1 or 2, wherein the sensor panel comprises a mutual capacitance type detection sensor comprising the first detection-electrode group and the second detection-electrode group.

4. The operation device according to any one of claims 1 to 3, wherein the first detection-electrode group and the second detection-electrode group each comprises a transparent electrode.

5. The operation device according to claim 1, wherein the sensor panel comprises a center hole area corresponding to a display surface and an operation surface of the instrument.

6. The operation device according to claim 5, wherein the first detection-electrode group and the second detection-electrode group are not formed in the center hole area.
